# EUROPÄISCHE PATENTSCHRIFT

(11) **EP 0 538 687 B1**
(45) Veröffentlichungstag und Bekanntmachung des Hinweises auf die Patenterteilung: **05.03.1997**
(21) Anmeldenummer: 92117240.9
(22) Anmeldetag: 09.10.1992
(51) Int. Cl.: C08G 8/28

(54) **Flüssige Härtermischung für die Härtung von alkalischen Phenol-Resorcin-Formaldehyd-Harzen**
Liquid curing agent composition for hardening of alkaline phenol-resorcin-formaldehyde resins
Composition de durcisseur liquide pour le durcissement des résines phenol-resorcin-formaldehyde alcalines

(30) Priorität: 22.10.1991 DE 4134776
(43) Veröffentlichungstag der Anmeldung: 28.04.1993
(73) Patentinhaber: BASF Aktiengesellschaft, 67063 Ludwigshafen (DE)
(72) Erfinder: Duda, Ulrich-Michael, Dr., W-6710 Frankenthal (DE); Neumann, Claus, Dr., W-6520 Worms 1 (DE); Pfuetze, Eberhard, Dr., W-6506 Nackenheim (DE); Dormeyer, Dieter, W-6701 Fussgoenheim (DE); Schatz, Hermann, W-6730 Neustadt (DE); Matthias, Guenther, Dr., W-6710 Frankenthal (DE)

(56) Entgegenhaltungen:
- EP-A- 0 259 042
- EP-A- 0 383 098
- FR-A- 2 255 166

## Beschreibung

Die vorliegende Erfindung betrifft flüssige Härtermischungen für die Kaltverleimung von Holz mit Phenol-Resorcin-Formaldehyd-Harzen, wobei die Härtermischungen
A) 40 - 85 Gew.-% eines cyclischen Kohlensäureesters und
B) 15 - 60 Gew.-% Paraformaldehyd enthalten.

Weiterhin betrifft die Erfindung ein Verfahren zur Herstellung von Holzformteilen.

Bei der Flächenverleimung im Kaltverfahren mit Phenol-Resorcin-Formaldehyd-Harzen ist die Anwendung härtungsbeschleunigender Substanzen forderlich.

Es ist allgemein bekannt, zu diesem Zwecke Formaldehyd als Härter zu verwenden, wobei dieser üblicherweise entweder als Paraformaldehyd in Pulverhärtern oder als Formaldehyd in Form einer wäßrigen Lösung in Flüssighärtern eingesetzt wird.

Für viele technische Anwendungen werden von der Holzleimbau-Industrie zunehmend flüssige Härtersysteme bevorzugt eingesetzt.

In der DE-AS 2363782 wird ein Verfahren zur Herstellung von heißwasserbeständigen Holzwerkstoffen beschrieben, bei dem einem Phenol-Aldehyd-Harz eine Lösung aus Alkylencarbonat und wäßrigem Formalin zugesetzt wird. In diesem Zusammenhang wird auf die Schwierigkeiten bei der Verwendung von flüssigen Alkylencarbonaten hingewiesen. Beim Einarbeiten solcher Alkylencarbonate in die Harzlösungen kommt es zur Bildung gallertartiger Teilchen, was durch die Mischung mit wäßriger Formalinlösung vermieden werden soll.

Die BE-PS 709139 bezieht sich ebenfalls auf die Herstellung heißwasserbeständiger Holzwerkstoffe mit alkalisch kondensierten Phenol-Aldehyd-Harzen, wobei während der Kondensation dieser Harze oder bei deren Anwendung Carbonate zu der Harzlösung gegeben werden. Hierbei kommen sowohl anorganische Carbonate z.B. der Alkalimetalle oder organische Carbonate wie Propylencarbonat zur Anwendung.

In der EP-A 259042 wird ein Verfahren zur Herstellung von lignocellulosehaltigen Materialien beschrieben, bei dem Ester, Lactone oder organische Carbonate als Härtersubstanzen in Phenol-Formaldehyd-Harzen suspendiert werden.

Aus der EP-A 383 098 sind Härtermischungen für Phenol-Formaldehyd-Harze bekannt, die durch Mischen von Füllstoffen mit Kohlensäureestern und gegebenenfalls Paraformaldehyd erhalten werden und eine pulvrige Konsistenz aufweisen.

Nachteilig an den bisher bekannten flüssigen Härtern ist, daß sie entweder zu schlechter Konsistenz der Leimflotte führen oder, im Falle der Verwendung von wäßrigem Formalin oder Paraformaldehyd in wäßriger Suspension bei der Verarbeitung zu hohe Formaldehyd-Emissionswerte verursachen. Weiterhin sind die Antrockenzeiten häufig zu kurz, was vor allem bei der Herstellung von Holzleimbauteilen mit großen Abmessungen Probleme bereitet.

Aufgabe der vorliegenden Erfindung war es, flüssige Härtermischungen bereitzustellen, die vorteilhafte Eigenschaften bezüglich FormaldehydEmission und Antrockenzeiten aufweisen und dabei die anwendungstechnischen Anforderungen, vor allem hinsichtlich der bauaufsichtlichen Zulassung, bei der Herstellung von Holzformteilen durch Kaltverleimung von Massivholz erfüllen.

Demgemäß wurden die eingangs definierten flüssigen Härtermischungen gefunden.

Als Komponente A) werden cyclische Kohlensäureester verwendet, die unter den Verarbeitungsbedingungen flüssig sind. Geeignete Verbindungen sind beispielsweise Propylencarbonat, Vinylidencarbonat und halogenierte cyclische Kohlensäureester. Bevorzugt wird Propylencarbonat verwendet.

Die Komponente A) wird in einer Menge von 40 - 85 Gew.-%, bevorzugt 45 - 65 Gew.-%, bezogen auf die Summe von A) und B), eingesetzt.

Als Komponente B) wird Paraformaldehyd verwendet. Dabei kann sowohl Paraformaldehyd mit höheren Polymerisationsgraden im Bereich von n = 20 - 40 als auch solcher mit niederen Polymerisationsgraden im Bereich von n = 5 - 15 eingesetzt werden. Es können auch Gemische davon verwendet werden, beispielsweise solche, die 40 - 90 Gew.-% Paraformaldehyd mit höherem Polymerisationsgrad und 10 - 60 Gew.-% Paraformaldehyd mit niederem Polymerisationsgrad enthalten.

Die erfindungsgemäßen Mischungen können noch weitere Komponenten wie Tonerde und/oder Kern- und Nußschalenmehle, die als Füllstoffe dienen, sowie mehrwertige Alkohole, beispielsweise Diethylenglykol, oder Glycerin, zur Beeinflussung der Lagerstabilität oder Thixotropiermittel wie Bentonit oder pyrogene Kieselsäure, sowie handelsübliche Entschäumer enthalten. Außerdem können noch natürliche Gerbstoffextrakte wie Tannine, Akazienrindenextrakte oder Quebracho enthalten sein.

Weiterhin können die erfindungsgemäßen Härtermischungen zur Steuerung der Reaktivität noch Carbonsäuren wie Benzoesäure, Salicylsäure oder Milchsäure enthalten.

Die erfindungsgemäßen Mischungen können diese weiteren Komponenten vorzugsweise in folgenden Mengen in 100 Gew.-Teile Härtermischung enthalten:
- Tonerde und/oder Mehle 5 - 28 Gew.-Teile, vorzugsweise 18 - 23 Gew.-Teile
- mehrwertige Alkohole 8 - 10 Gew.-Teile, vorzugsweise 8,5 -9,5 Gew.-Teile
- Thixotropiermittel 0,2 - 5 Gew.-Teile vorzugsweise 0,4 - 0,5 Gew.-Teile
- Entschäumer 0,1 - 3 Gew.-Teile, vorzugsweise 0,2 - 0,4 Gew.-Teile
- natürliche Gerbstoffextrakte 3 - 8 Gew.-Teile
- organische Säuren 0,5 - 5,5 Gew.-Teile, vorzugsweise 1,4 - 1,8 Gew.-Teile

Die erfindungsgemäßen Härtermischungen eignen sich zur Härtung von wäßrigen Harzlösungen auf Basis von Kondensationsprodukten aus Phenol, Resorcin und Formaldehyd.

Solche wäßrigen Harzlösungen sind an sich bekannt und können durch Kondensation der Ausgangskomponenten im alkalischen Milieu hergestellt werden. Geeignete Kondensationsprodukte können unter Verwendung von Phenol, Resorcin und Formaldehyd in den folgenden Molverhältnissen hergestellt werden: pro Mol Phenol werden vorzugsweise 0,85 - 1,25 Mole Resorcin und 1 bis 1,2 Mole Formaldehyd eingesetzt. Die Kondensation findet im alkalischen Milieu statt, wobei pro Mol Phenol im allgemeinen 0,05 bis 0,3 Mole Metallhydroxid als Base Verwendung finden. Geeignete Metallhydroxide sind Alkali- und/oder Erdalkalihydroxide, vorzugsweise Natriumhydroxid, Kaliumhydroxid und Calciumhydroxid. Die Kondensation kann bei 75 - 100°C erfolgen.

Die einzelnen Komponenten werden solange miteinander kondensiert, daß die resultierenden Harzlösungen Viskositäten, vorzugsweise im Bereich von 500 - 5000 mPa.s (bei 20°C) bei Feststoffgehalten von vorzugsweise 50 - 70 Gew.-% aufweisen. Auch bei Viskositäten zwischen 500 und 900 werden gute Ergebnisse erzielt.

Die Feststoffgehalte können als Trockengehalte bestimmt werden, indem eine Harzprobe zwei Stunden lang im Trockenschrank bei 120°C getrocknet wird.

Die Harzlösungen können nach der Kondensation noch Alkaligehalte von 0,6 - 3,0 Gew.-%, insbesondere von 0,6 bis 2,0 Gew.-% aufweisen.

Weiterhin können solche Harzlösungen noch
- 3,0 - 6,0 Gew.-% mehrwertige Alkohole
- 2,0 - 15,0 Gew.-% Nußschalenmehle,
- 3,0 - 12,0 Gew.-% Cellulosen und Cellulosederivate,
- 4,0 - 5,0 Gew.-% Tonerden
- 0,2 - 5,0 Gew.-% Thixotropiermittel,
enthalten, jeweils bezogen auf 100 Gew.-% Harzlösung.

Zu diesen Harzlösungen werden die erfindungsgemäßen flüssigen Härtermischungen unter Rühren zugegeben. Dabei wird vorteilhaft die Menge an Härtermischung so gewählt, daß pro 100 Gew. -Teile an Harzlösung 12 bis 35, bevorzugt 15 bis 25 Gew.-Teile zugegeben werden.

Die erfindungsgemäßen Härtermischungen kommen vor allem bei der Flächenverleimung im Kaltverfahren von Massivholz zur Anwendung, beispielsweise bei der Verleimung von Holzlamellen zu Brettschichtträgern in der Holzleimbauindustrie.

Leimflotten, die mit den erfindungsgemäßen Härterlösungen hergestellt werden, sind besonders geeignet, wenn die im Rahmen der bauaufsichtlichen Zulassung für die Verleimung tragender Holzbauteile gemäß DIN 68 141 und DIN 53 254 gestellten Anforderungen, insbesondere bezüglich der Abbindegeschwindigkeit, der Lagerungsfolgen, der Gebrauchsdauer der Leimflotte und der offenen Antrockenzeit erfüllt werden sollen.

### Flüssighärter 1

25 kg Paraformaldehyd mit einem mittleren Polymerisationsgrad von 30, 23 kg China Clay, 1,5 kg Salicylsäure und 0,5 kg Bentonit werden in 50 kg Propylencarbonat suspendiert.

### Flüssighärter 2

Die Herstellung erfolgte analog zu Härter 1, jedoch wurde eine Paraformaldehyd-Mischung verwendet, die aus Paraformaldehyd mit einem mittleren Polymerisationsgrad von 40 und solchem mit einem mittleren Polymerisationsgrad von 10 in einem Gewichtsverhältnis von 3 : 1 bestand.

### Harzlösung 1

Es wurde ein wäßriges Phenol-Resorcin-Formaldehyd-Kondensationsprodukt mit einem Molverhältnis Phenol : Resorcin : Formaldehyd von 1 : 0,85 : 1,02, welches noch Natriumhydroxid in Mengen von 1,6 Gew.-% enthielt, hergestellt. Die Viskosität der Harzlösung betrug 3400 mPa·s (20°C), bei einem Feststoffgehalt von 67,7 Gew.-%.

### Harzlösung 2

Es wurde ein wäßriges Phenol-Resorcin-Formaldehydkonensationsprodukt mit einem Molverhältnis Phenol : Resorcin : Formaldehyd von 1 : 1,21 : 1,18 hergestellt, welches noch Natriumhydroxid in Mengen von 1,48 Gew.-% enthielt. Die Viskosität betrug 2900 mPa·s (20°C) bei einem Feststoffgehalt von 69,1 Gew.-%.

### Harzlösung 3

Es wurde ein wäßriges Phenol-Resorcin-Formaldehydkondensat hergestellt mit einem Molverhältnis Phenol : Resorcin : Formaldehyd von 1 : 0,85 : 1,03, welches noch 2,0 Gew.-% Calciumhydroxid enthielt. Die Viskosität der Harzlösung betrug 3300 mPa·s (20°) bei einem Feststoffgehalt von 64,7 Gew.-%-

### Beispiele 1 bis 4

### Allgemeine Vorschrift zur Herstellung der Leime

Zu der jeweiligen Harzlösung, welche pro 100 kg noch 0,5 kg Benonit, 0,1 kg Entschäumer, 4,9 kg Diethylenglykol, 9,6 kg Kokosnußschalenmehl und 4,8 kg China Clay enthielt, wurden die flüssigen Härtermischungen unter Rühren zugegeben. Die Zusammensetzung der einzelnen Leime ist in der nachstehenden Tabelle aufgelistet.

**Tabelle I**

| | Härter Nr./Menge [kg] | Harzlsg. Nr./Menge (kg) |
|---|---|---|
| Leim nach | | |
| Beispiel 1 | 1/15 | 1/100 |
| Beispiel 2 | 1/20 | 1/100 |
| Beispiel 3 | 2/25 | 2/100 |
| Beispiel 4 | 2/25 | 3/100 |

Mit den Leimen wurden Prüfkörper aus Buchenholz gemäß DIN 53 254 hergestellt und nach DIN 68 141 geprüft (siehe Tabelle II). Weiterhin wurden die Leimeigenschaften nach DIN 68 141 und die Formaldehyd-Emission nach DIN 52 368 beurteilt (siehe Tabelle III).

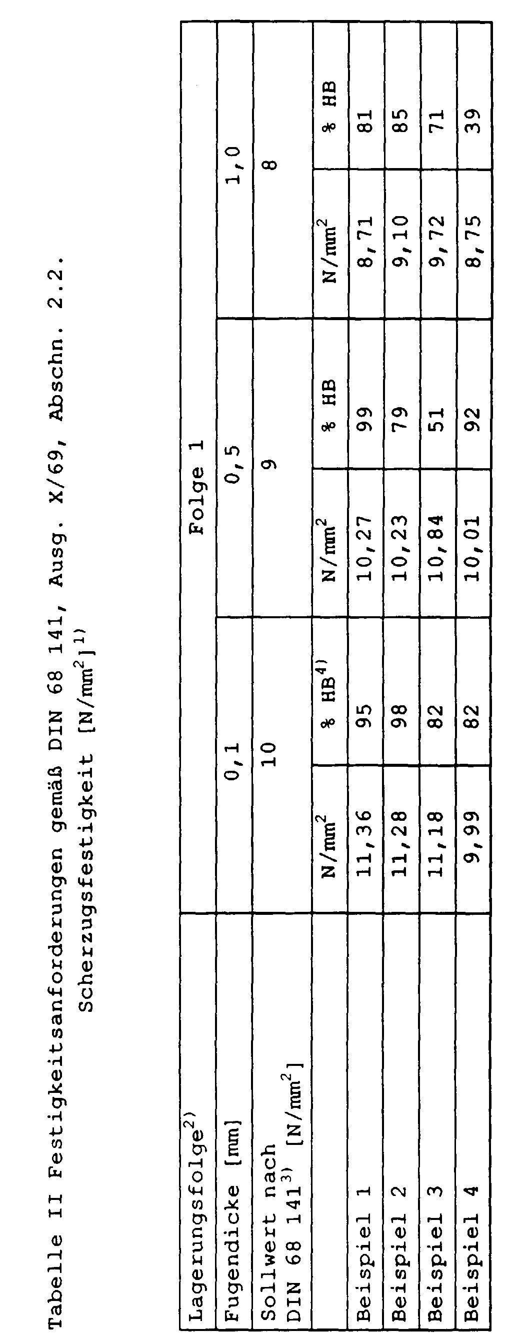

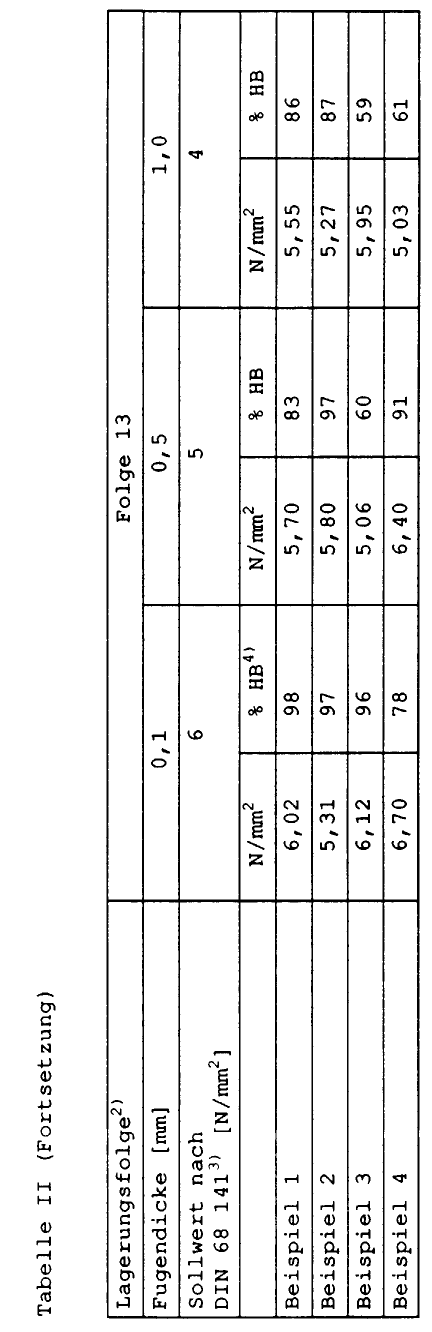

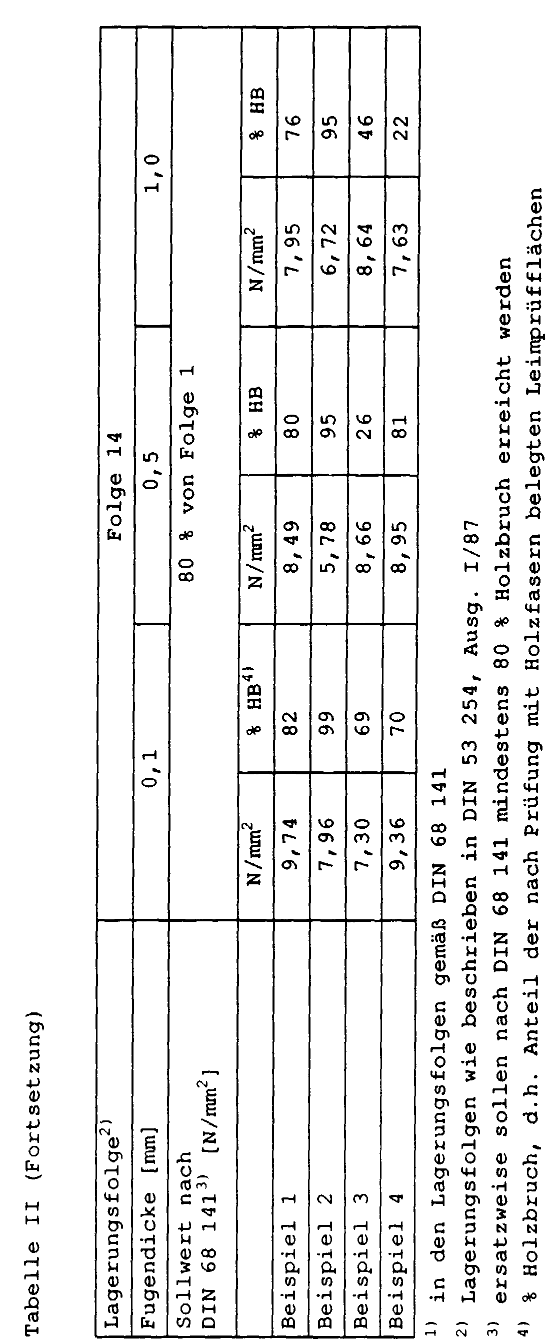

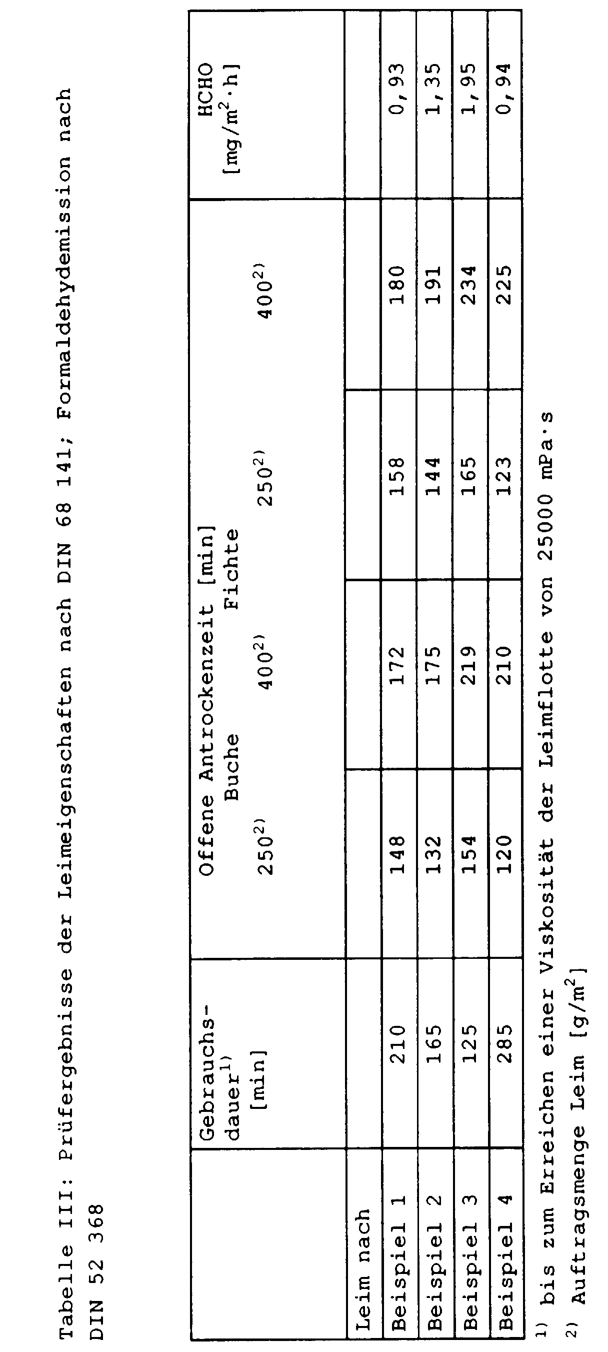

## Patentansprüche

1. Flüssige Härtermischung, enthaltend
A) 40 - 85 Gew.-% eines cyclischen Kohlensäureesters und
B) 15 - 60 Gew.% Paraformaldehyd.

2. Flüssige Härtermischung nach Anspruch 1, enthaltend zusätzlich noch Füllstoffe, mehrwertige Alkohole, Thixotropiermittel, organische Säuren oder Entschäumer.

3. Verwendung einer flüssigen Härtermischung gemäß Anspruch 1 oder 2 zur Härtung von Kondensaten auf Basis von Phenol, Resorcin und Formaldehyd.

4. Holzformteile, erhältlich durch Kaltverleimung von Massivholz mit Phenol-Resorcin-Formaldehyd-Kondensaten unter Verwendung einer flüssigen Härtermischung gemäß Anspruch 1 oder 2.

## Claims

1. A liquid curing agent mixture containing
A) 40-85% by weight of a cyclic carbonic ester and
B) 15-60% by weight of paraformaldehyde.

2. A liquid curing agent mixture as claimed in claim 1, additionally containing fillers, polyhydric alcohols, thixotropic agents, organic acids or anitfoams.

3. Use of a liquid curing agent mixture as claimed in claim 1 or 2 for curing condensates based on phenol, resorcinol and formaldehyde.

4. A shaped wooden component obtainable by cold gluing solid wood with a phenol/resorcinol/formaldehyde condensate using a liquid curing agent mixture as claimed in claim 1 or 2.

## Revendications

1. Mélange durcisseur liquide, contenant
A) 40 à 85% en poids d'un ester cyclique d'acide carbonique et
B) 15 à 60% en poids de paraformaldéhyde.

2. Mélange durcisseur liquide selon la revendication 1, contenant en plus des charges, des polyalcools, des agents de thixotropie, des acides organiques ou des agents antimousse.

3. Utilisation d'un mélange durcisseur liquide selon la revendication 1 ou 2 pour le durcissement de produits de condensation à base de phénol, de résorcinol et de formaldéhyde.

4. Articles façonnés en bois, obtenus par collage à froid de bois massif avec des produits de condensation phénol/résorcinol/formaldéhyde, avec utilisation d'un mélange durcisseur liquide selon la revendication 1 ou 2.
